# DEMANDE DE BREVET EUROPEEN

(11) **EP 4 818 041 A1**
(43) Date de publication de la demande: **07.10.2026**
(21) Numéro de dépôt: 25216636.8
(22) Date de dépôt: 18.11.2025
(51) Int. Cl.: B64C 13/04, B64C 13/10, B64C 13/50

(54) **PROCÉDÉ ET DISPOSITIF D'AIDE AU PILOTAGE D'UN AÉRONEF COMPORTANT UNE INSTALLATION MOTRICE HYBRIDE POUR INDIQUER PAR RETOUR HAPTIQUE UNE QUANTITÉ D'ÉNERGIE ÉLECTRIQUE D'UNE SOURCE D'ENERGIE ÉLECTRIQUE**

(30) Priorité: 02.04.2025 FR 2503451
(71) Demandeur: Airbus Helicopters, 13725 Marignane Cedex (FR)
(72) Inventeur: BARTHELEMY, Romain, 13725 MARIGNANE Cedex (FR); LOGEAIS, Jean-François, 13725 MARIGNANE Cedex (FR); GAZZINO, Marc, 13725 MARIGNANE Cedex (FR); KOVEL, Romain, 13725 MARIGNANE Cedex (FR); NEVERS, Romain, 13725 MARIGNANE Cedex (FR); AMOKRANE, Mounir, 13725 MARIGNANE Cedex (FR)
(74) Mandataire: GPI Brevets

(57) **Abrégé**

La présente invention concerne un procédé d'aide au pilotage d'un aéronef, ledit aéronef comportant une installation motrice hybride ainsi qu'une chaîne cinématique (35) commandant une gouverne aérodynamique (20) et munie d'une commande de vol (31) et d'un actionneur de commande (30) relié à ladite commande (31). Selon ce procédé, on mesure au moins une caractéristique de ladite installation motrice hybride, puis on détermine un seuil relatif à un paramètre fonctionnel de ladite installation motrice hybride en fonction de ladite caractéristique. On calcule ensuite une position limite de ladite commande (31) pour laquelle ledit paramètre fonctionnel est égal audit seuil, on mesure une position courante de ladite commande (31), et on applique un premier effort sur ladite commande selon une loi d'effort préétablie fonction d'une quantité d'énergie électrique d'une source d'énergie électrique de ladite installation motrice hybride lorsque ladite position courante dépasse ladite position limite.

## Description

La présente invention se situe dans le domaine technique des commandes de vol d'aéronefs, et en particulier pour les aéronefs munis d'une installation motrice hybride.

L'invention concerne un procédé d'aide au pilotage d'un aéronef muni d'une installation motrice hybride et un dispositif d'aide au pilotage d'un tel aéronef pour indiquer par retour haptique une quantité d'énergie électrique d'une source d'énergie électrique de l'installation motrice hybride.

Un aéronef, et en particulier un giravion, peut comporter un ou plusieurs rotors entraînés en rotation par une installation motrice. Un giravion peut, par exemple, comporter un rotor de sustentation participant à la sustentation, voire au déplacement du giravion. Un giravion peut aussi comporter un rotor auxiliaire, par exemple un rotor arrière, pour notamment contrôler les mouvements en lacet du giravion. Un giravion peut également comporter une ou plusieurs hélices.

Par la suite, le terme « rotor » peut désigner notamment un rotor de sustentation, un rotor auxiliaire anti-couple permettant de contrôler les mouvements de lacet du giravion ou une hélice propulsive ou tractive.

Un aéronef comporte aussi au moins une gouverne aérodynamique commandée à l'aide d'un actionneur de vol, par exemple une servocommande, afin de diriger l'aéronef. Une gouverne aérodynamique peut être une pale d'un rotor. Une gouverne aérodynamique peut aussi être un volet de profondeur ou de direction par exemple agencé sur une aile ou un empennage, dont un angle d'inclinaison est modifié par un actionneur de vol.

En outre, une chaîne cinématique comporte une commande de vol, tel un levier, un manche ou un palonnier par exemple, manipulée par un pilote pour piloter une gouverne aérodynamique, via au moins un actionneur de vol.

Le système de commande de vol peut être dit « électrique », la commande de vol transmettant un signal électrique ou optique pour commander un actionneur de vol. Le système de commande de vol peut être dit « mécanique », la commande de vol étant reliée par plusieurs bielles à l'actionneur de vol pour le commander.

Le document FR 2946620 décrit un actionneur de commande relié directement à une commande de vol et configuré pour ancrer la commande de vol à une position prédéfinie, notamment lors du fonctionnement d'un système de pilotage automatique de l'aéronef. Un tel actionneur de commande peut aussi faire office de butées douces ou franches.

Dans le cadre d'une commande de vol mécanique, cet actionneur de commande est dit « actionneur parallèle » ou « actionneur de trim », et relie directement la commande de vol ou bien une bielle de la chaîne cinématique à un point fixe de la structure de l'aéronef. Cet actionneur parallèle fait partie des organes d'un système de pilotage automatique de l'aéronef.

L'installation motrice d'un tel aéronef peut être une installation motrice hybride. Une installation motrice hybride peut comporter au moins un moteur thermique et au moins une machine électrique ainsi qu'une chaîne de transmission mécanique entraînant en rotation un ou plusieurs rotors à l'aide dudit au moins un moteur thermique et/ou de ladite au moins une machine électrique.

Une telle installation motrice hybride comporte également une source d'énergie électrique alimentant électriquement la ou les machines électriques, par l'intermédiaire d'un réseau électrique. Par la suite, le terme « source » est utilisé pour désigner plus simplement une source d'énergie électrique.

Cette source peut par exemple comporter au moins une batterie électrique rechargeable, une pile à combustible reliée à un réservoir de combustible, et/ou un supercondensateur.

La machine électrique peut être un moteur électrique ayant uniquement une fonction moteur pour transformer une énergie électrique fournie par la source en énergie mécanique transmise à la chaîne de transmission mécanique, puis au rotor. Alternativement, la machine électrique peut être un générateur électrique ayant uniquement une fonction générateur pour transformer une énergie mécanique transmise par la chaîne de transmission mécanique en énergie électrique pour par exemple recharger la source ou alimenter électriquement des équipements de l'aéronef. La machine électrique peut également être un moteur-générateur ayant la fonction moteur et la fonction générateur.

Il est à noter que l'expression « moteur thermique » désigne par commodité dans l'ensemble du texte tout moteur thermique, par exemple des turbomoteurs ou des moteurs à pistons. L'expression « moteur thermique » est à opposer aux expressions « moteur électrique » ou « machine électrique » qualifiant les moteurs mus par une énergie électrique.

Selon le fonctionnement de l'installation motrice hybride, le ou les moteurs thermiques et la ou les machines électriques peuvent être implantés différemment, et utilisés indépendamment ou bien en combinaison, simultanément ou séquentiellement pour l'entraînement en rotation d'un rotor.

Toutefois, l'utilisation d'une telle machine électrique est soumise à certaines contraintes, en particulier liées à la source d'énergie électrique. En effet, la faible densité énergétique des batteries électriques, en comparaison de celle du carburant alimentant les moteurs thermiques, est une contrainte à prendre en compte dans le dimensionnement de l'installation motrice hybride, ainsi que dans son mode d'utilisation. La quantité courante d'énergie électrique de la source et susceptible d'être fournie à une machine électrique en vol, est donc limitée, et autorise alors la fourniture d'une puissance électrique pendant une durée limitée. De plus, une source d'énergie électrique peut être rechargeable et peut à ce titre être rechargée, au moins partiellement, en vol, sa quantité courante d'énergie électrique augmentant alors.

Dès lors, la quantité d'énergie électrique de la source peut varier considérablement au cours d'un vol. Cependant, le pilote a besoin d'avoir connaissance en permanence de la quantité d'énergie électrique dans la source pour déterminer les performances atteignables par l'aéronef. Un indicateur peut indiquer au pilote cette quantité d'énergie électrique de la source, ainsi qu'éventuellement l'énergie électrique consommée par l'installation motrice hybride. Toutefois, un pilote peut avoir une charge de travail importante l'empêchant de consulter en permanence cet indicateur.

Le document US 10193374 est éloigné du domaine technique de l'invention. Ce document décrit un dispositif électronique muni d'une batterie électrique, tel un smartphone, un ordinateur portable, une tablette ou encore une montre. Le cas échéant, ce dispositif électronique indique, par exemple par la génération d'une ou plusieurs vibrations, que la quantité d'énergie électrique de la batterie est passée en dessous d'un seuil prédéterminé.

L'arrière-plan technologique de l'invention comporte également les documents US 2005/0151672, FR 3117447 et FR 3021627.

L'invention a alors pour objet de proposer un dispositif et un procédé d'aide au pilotage pour aéronef permettant de s'affranchir des limitations mentionnées ci-dessus, et visant à réduire la charge de travail du pilote de l'aéronef.

La présente invention a tout d'abord pour objet de proposer un procédé d'aide au pilotage d'un aéronef, cet aéronef comportant au moins une chaîne cinématique pour commander une gouverne aérodynamique, la chaîne cinématique étant munie d'une commande de vol et d'un actionneur de commande relié à la commande de vol, cet aéronef comportant une installation motrice hybride, l'installation motrice hybride étant munie d'au moins un moteur thermique, d'au moins une machine électrique, d'une source d'énergie électrique et d'une chaîne de transmission mécanique entraînant en rotation un rotor.

Selon l'invention, un tel procédé d'aide au pilotage d'un aéronef est remarquable en ce qu'il comporte les étapes suivantes :
- mesure d'au moins une caractéristique dudit au moins un moteur thermique, de la chaîne de transmission mécanique ou du rotor,
- détermination d'un seuil relatif à un paramètre fonctionnel de l'installation motrice hybride en fonction de ladite au moins une caractéristique,
- calcul d'une position limite de la commande de vol pour laquelle le paramètre fonctionnel de l'installation motrice hybride est égal au seuil,
- mesure d'une position courante de la commande de vol, et
- application d'un premier effort sur la commande de vol à l'aide de l'actionneur de commande selon une loi d'effort préétablie lorsque la position courante de la commande de vol dépasse la position limite, la loi d'effort préétablie étant fonction au moins d'une quantité courante d'énergie électrique de la source.

La présente invention consiste ainsi à restituer au pilote de l'aéronef, sensiblement en temps réel, un retour d'effort au travers de la commande de vol, qui est fonction de la quantité courante d'énergie électrique de la source. De la sorte, le pilote a conscience de la quantité d'énergie disponible au niveau de la source sans avoir besoin de regarder un afficheur et en restant avantageusement focalisé sur l'extérieur de l'aéronef et sur la manœuvre à réaliser.

Un calculateur de l'aéronef, éventuellement dédié à la réalisation du procédé selon l'invention, est configuré pour recevoir la mesure d'une ou de plusieurs caractéristiques liées au fonctionnement dudit au moins un moteur thermique, de la chaîne de transmission mécanique ou du rotor, puis pour déterminer un seuil relatif à un paramètre fonctionnel de l'installation motrice hybride et une position limite de la commande de vol correspondant à ce seuil. Le seuil et la position limite de la commande de vol peuvent être déterminés à l'aide de lois préalablement enregistrées dans une mémoire du calculateur ou dans une mémoire reliée au calculateur.

Le calculateur pilote ensuite l'actionneur de commande pour générer un premier effort résistant sur la commande de vol quand la position limite est dépassée. Le premier effort varie en fonction notamment de la quantité courante d'énergie électrique de la source afin que le pilote de l'aéronef ait conscience, à l'aide de la commande de vol et au travers ce premier effort, de cette quantité courante d'énergie électrique de la source.

Lorsque la commande de vol repasse en dessous de la position limite, la génération du premier effort est arrêtée.

Le procédé selon l'invention peut être appliqué à n'importe quelle commande de vol de l'aéronef, pilotant la position d'une gouverne aérodynamique exerçant une influence sur le déplacement de l'aéronef, et par exemple sur les pales d'un rotor ou un volet de profondeur ou de direction. Ce procédé peut en particulier être appliqué à la commande de vol contrôlant la puissance propulsive de l'aéronef. Dans le cas particulier d'un hélicoptère usuel, le procédé peut ainsi être appliqué sur le manche contrôlant une variation collective du pas des pales du rotor de sustentation.

L'actionneur de commande peut être dédié à la réalisation du procédé selon l'invention. Alternativement, l'actionneur de commande peut réaliser d'autres fonctions, et peut prendre la forme d'un actionneur de trim éventuellement. L'actionneur de commande peut être un vérin, hydraulique, pneumatique ou électrique, ou un moteur électrique.

Le procédé d'aide au pilotage selon l'invention peut de plus comporter une ou plusieurs des caractéristiques qui suivent, prises seules ou en combinaison.

Selon une possibilité, la position courante et la position limite de la commande de vol peuvent être définies respectivement par des angles de la commande de vol par rapport à une position de référence de la commande de vol.

La position de référence de la commande de vol est par exemple une position neutre de la commande de vol atteinte lorsqu'aucun effort n'est appliqué sur cette commande de vol par un pilote.

Selon une possibilité compatible avec les précédentes, ladite au moins une caractéristique peut comporter une ou plusieurs des caractéristiques suivantes :
- une température interne, un couple moteur, un couple moteur maximal et un taux de vieillissement dudit au moins un moteur thermique, une durée d'utilisation de ce moteur thermique à ce couple moteur,
- une température interne, un couple moteur, un couple moteur maximal et un taux de vieillissement de la chaîne de transmission mécanique,
- une vitesse de rotation du rotor.

La ou les caractéristiques permettent ainsi de caractériser le fonctionnement dudit au moins un moteur thermique, de ladite boîte de transmission de puissance et/ou du rotor. Une ou plusieurs de ces caractéristiques peuvent ainsi être utilisées pour déterminer le seuil du paramètre fonctionnel de l'installation motrice hybride.

Le taux de vieillissement dudit au moins un moteur thermique ou de ladite boîte de transmission de puissance est par exemple égal à une durée de fonctionnement, ou est déterminé en fonction au moins de cette durée de fonctionnement.

Selon une possibilité compatible avec les précédentes, le procédé peut comporter une mesure d'au moins un paramètre environnemental parmi une température et une pression atmosphérique extérieures à l'aéronef, la détermination du seuil et le calcul de la position limite de la commande de vol pouvant être effectués en fonction dudit au moins un paramètre environnemental.

Selon une possibilité compatible avec les précédentes, le calcul d'une position limite peut être effectué en fonction du seuil, du paramètre fonctionnel de l'installation motrice hybride, d'une vitesse d'avancement de l'aéronef et d'une vitesse de rotation du rotor.

Dans ce cas, le procédé comporte les mesures de la vitesse d'avancement de l'aéronef et de la vitesse de rotation du rotor. Ces mesures peuvent être effectuées par des capteurs dédiés au procédé ou faisant partie d'un système avionique de l'aéronef qui transfert ces mesures au calculateur en charge de la mise en œuvre du procédé.

Selon une possibilité compatible avec les précédentes, la loi d'effort préétablie peut être choisie parmi une liste comportant par exemple :
- une loi par paliers, les paliers étant associés respectivement à des intervalles de la quantité d'énergie électrique de la source, le premier effort étant constant pour chaque palier et augmentant d'un palier à l'autre parallèlement à une baisse de la quantité d'énergie électrique de la source,
- une loi élastique, le premier effort variant avec la position courante de la commande de vol et la quantité d'énergie électrique de la source, le premier effort étant égal à un angle courant de la commande de vol multiplié par une première raideur, la première raideur augmentant en fonction d'une baisse de la quantité d'énergie électrique de la source, de façon continue ou par paliers, l'angle courant de la commande de vol étant défini par rapport à une position de référence de la commande de vol,
- une loi d'amortissement, le premier effort variant avec une vitesse de déplacement de la commande de vol et la quantité d'énergie électrique de la source, le premier effort étant égal à cette vitesse de déplacement multipliée par une seconde raideur, la seconde raideur augmentant en fonction d'une baisse de la quantité d'énergie électrique de la source, de façon continue ou par paliers, et
- une loi vibratoire, le premier effort générant des vibrations dans la commande de vol à chaque dépassement de niveaux prédéterminés de la quantité d'énergie électrique de la source, une intensité des vibrations étant identique à chaque dépassement ou augmentant d'un dépassement à l'autre au fur et à mesure que la quantité d'énergie électrique de la source diminue.

De la sorte, le pilote, connaissant la loi d'effort préétablie appliquée pour générer le premier effort, peut avoir conscience, par un retour haptique, de la quantité courante d'énergie électrique de la source.

Ces lois peuvent avoir été enregistrées dans une mémoire du calculateur ou une mémoire reliée au calculateur.

Selon une possibilité compatible avec les précédentes, le procédé peut comporter une fourniture par la machine électrique d'une puissance mécanique non nulle au rotor lorsque la position courante de la commande de vol est supérieure ou égale à la position limite.

De la sorte, dès que la position courante de la commande de vol atteint la position limite, à savoir dès que le paramètre fonctionnel de l'installation motrice est sensiblement égal au seuil, la machine électrique est pilotée pour fournir une puissance mécanique non nulle au rotor, via la chaîne de transmission mécanique, afin d'injecter cette puissance mécanique dans le système propulsif, et contribuer ainsi seule ou en combinaison avec le ou les moteurs thermiques de l'installation motrice à l'entraînement en rotation de ce rotor. Dans ce but, le calculateur peut piloter directement la machine électrique, ou par l'intermédiaire d'un contrôleur associé à la machine électrique.

La machine électrique peut ainsi être démarrée automatiquement lorsque la position courante de la commande de vol atteint la position limite pour fournir la puissance mécanique non nulle au rotor. Ce démarrage peut de façon complémentaire être signalé par l'affichage d'une information sur un écran du cockpit de l'aéronef.

Alternativement, la machine électrique peut être préalablement démarrée en fournissant une puissance mécanique nulle tant que la position courante de la commande de vol est en dessous de la position limite.

Ainsi, lorsque le seuil est atteint par le paramètre fonctionnel, la machine électrique fournit automatiquement un complément de puissance au rotor de sorte par exemple à éviter que le paramètre fonctionnel ne dépasse le seuil, ou ne le dépasse de façon trop importante, préservant avantageusement le ou les moteurs thermiques et la chaîne de transmission mécanique.

Lorsque la commande de vol repasse en dessous de la position limite, la machine électrique est arrêtée ou alternativement reste démarrée, sans fournir de puissance mécanique au rotor.

Selon une possibilité compatible avec les précédentes, le paramètre fonctionnel peut être un couple moteur dudit au moins un moteur thermique, et le seuil peut être un couple limite prédéterminé dudit au moins un moteur thermique.

Ce couple limite correspond par exemple à une saturation de couple du moteur thermique, à savoir que le moteur thermique atteint une limite de fonctionnement pouvant éventuellement générer des dégradations en cas de dépassement, en particulier si ce dépassement dure, par exemple plusieurs minutes. Ce couple limite est notamment fonction de la température et de la pression atmosphérique à l'extérieur de l'aéronef. Ce couple limite peut aussi être fonction du taux de vieillissement de ce moteur thermique.

Le couple limite peut, selon un autre exemple, être un couple atteint lorsque le moteur thermique fonctionne selon un régime spécial. Un tel régime spécial peut autoriser au moteur thermique de fournir une puissance élevée et un couple moteur important, et en particulier supérieurs à une puissance et à un couple nominaux pendant une durée limitée, par exemple égale à 30 secondes ou cinq minutes. Au-delà de cette durée limitée, une dégradation du moteur thermique ou de la chaîne de transmission de puissance est possible.

De la sorte, dès que la position courante de la commande de vol atteint la position limite, à savoir dès que le paramètre fonctionnel relatif au fonctionnement du moteur thermique est sensiblement égal au seuil, la machine électrique est pilotée pour fournir une puissance mécanique non nulle au rotor, via la chaîne de transmission mécanique.

Alternativement, le paramètre fonctionnel peut être un couple moteur mesuré dans la chaîne de transmission mécanique, et le seuil peut être un couple maximal de la chaîne de transmission mécanique.

Par exemple, un tel couple moteur mesuré peut être un couple d'entrée ou de sortie, voire un couple interne, d'une boîte de transmission de puissance de la chaîne de transmission mécanique, et le couple moteur maximal est alors un couple maximal.

De la sorte, dès que la position courante de la commande de vol atteint la position limite, à savoir dès que le paramètre fonctionnel relatif à la chaîne de transmission mécanique est sensiblement égal au seuil, la machine électrique est pilotée pour fournir une puissance mécanique non nulle au rotor, via la chaîne de transmission mécanique, limitant, voire évitant, ainsi le risque que ce paramètre fonctionnel de la chaîne de transmission mécanique dépasse le seuil, et par la suite limite les risques de dégradation de la chaîne de transmission mécanique.

Alternativement, le paramètre fonctionnel peut être une vitesse de rotation du rotor, qui est égale à la vitesse de rotation d'un arbre de sortie de la chaîne de transmission mécanique, et le seuil peut être une vitesse minimale de rotation du rotor.

En effet, le rotor peut avoir une vitesse nominale de rotation à respecter, en particulier dans le cas d'un giravion, pour assurer un vol en sécurité. Ainsi, lorsque la vitesse de rotation diminue et est inférieure à cette vitesse nominale de rotation, la machine électrique est pilotée pour fournir une puissance mécanique non nulle au rotor afin de garder une vitesse de rotation du rotor acceptable.

Dans ce cas, la loi d'effort préétablie peut être de préférence une loi d'amortissement ou une loi vibratoire, bien que d'autres lois soient utilisables.

Alternativement, le paramètre fonctionnel peut être une distance atteignable par l'aéronef et le seuil peut être une distance objectif, permettant par exemple de rejoindre un point d'atterrissage identifié. Cette distance atteignable par l'aéronef est fonction de la quantité de carburant disponible pour alimenter le ou les moteurs thermiques, voire de la quantité d'énergie électrique de la source, et peut être associée à une puissance mécanique maximale que l'installation motrice doit fournir au rotor pour garantir que l'aéronef parcourt au moins cette distance objectif. En effet, un dépassement de cette puissance mécanique maximale entraînerait en particulier une consommation trop importante de l'énergie électrique de la source et empêcherait que l'aéronef parcoure cette distance objectif.

Dans ce cas, la machine électrique peut fournir une puissance non nulle indépendamment de ce paramètre fonctionnel, par exemple avant que le paramètre fonctionnel n'atteigne le seuil. Le premier effort permet alors d'informer le pilote qu'en continuant à voler à la puissance courante, l'aéronef risque de ne pas atteindre le point d'atterrissage.

Selon une possibilité compatible avec les précédentes, la source peut comporter une batterie électrique, et la quantité courante d'énergie électrique de la source est un niveau de charge en énergie électrique de la batterie électrique.

Alternativement ou de façon complémentaire, la source peut comporter une pile à combustible, et la quantité courante d'énergie électrique de la source est fonction d'une quantité de combustible contenue dans un réservoir alimentant la pile à combustible et est par exemple proportionnelle à cette quantité de combustible, voire est égale à cette quantité de combustible, en masse ou en volume.

Selon une possibilité compatible avec les précédentes, le procédé peut comporter une application d'un second effort sur la commande de vol à l'aide de l'actionneur de commande lorsque la position courante de la commande de vol est égale à la position limite.

Ce second effort est ainsi appliqué sur la commande de vol lorsque le paramètre fonctionnel de l'installation motrice est sensiblement égal au seuil, voire lorsque la machine électrique fournit une puissance mécanique non nulle au rotor, le cas échéant.

Le pilote peut ainsi avoir conscience, à l'aide de la commande de vol et de la perception du second effort, que le paramètre fonctionnel de l'installation motrice atteint un seuil, voire que la machine électrique fournit une puissance mécanique non nulle au rotor.

Cette perception peut prendre la forme d'une butée douce, d'une butée dure ou d'une friction sur la commande de vol générée par le second effort. Une butée douce ou dure se caractérise par un effort plus ou moins important à dépasser pour que la commande atteigne une position située au-delà de cette position limite. Aucun effort n'est alors appliqué sur la commande de vol une fois la position limite dépassée. La friction se caractérise quant à elle par un effort constant pendant le déplacement de la commande de vol, donc indépendamment de la position de la commande de vol.

Le procédé selon l'invention permet ainsi de fournir une commande de vol disposant d'un retour de force commandé en fonction de l'utilisation de l'installation motrice de l'aéronef et en particulier de la ou des machines électriques, pour signaler d'une part, à l'aide du second effort, la fourniture d'une puissance mécanique non nulle par la ou les machines électriques et d'autre part, à l'aide du premier effort, le niveau de disponibilité de cette ou ces machines électriques.

Ce procédé permet ainsi de donner au pilote, en temps réel, l'information qu'il utilise ou non la ou des machines électriques, ainsi qu'une information relative à la quantité d'énergie électrique disponible pour alimenter cette ou ces machines électriques.

Par ailleurs, le second effort peut être intégré dans la loi d'effort préétablie, cette loi d'effort définissant ainsi le premier et le second efforts. Alternativement, le second effort peut être défini et généré indépendamment du premier effort et de la loi d'effort.

L'invention a encore pour objet un dispositif d'aide au pilotage d'un aéronef, le dispositif d'aide au pilotage comportant au moins une chaîne cinématique pour commander une gouverne aérodynamique, la chaîne cinématique étant munie d'une commande de vol et d'un actionneur de commande relié à la commande de vol, le dispositif d'aide au pilotage comportant un calculateur relié à l'actionneur de commande, l'aéronef comportant une installation motrice hybride, l'installation motrice hybride étant munie d'au moins un moteur thermique, d'au moins une machine électrique, d'une source d'énergie électrique et d'une chaîne de transmission mécanique entraînant en rotation un rotor.

Ce dispositif d'aide au pilotage est remarquable en ce que le calculateur est configuré pour mettre en œuvre le procédé d'aide au pilotage précédemment décrit.

Dans ce but, le dispositif d'aide au pilotage peut comporter notamment un senseur de mesure mesurant au moins une caractéristique de l'aéronef, un senseur angulaire mesurant la position courante de la commande de vol et une mémoire stockant la loi d'effort préétablie.

L'invention a enfin pour objet un aéronef comportant au moins une chaîne cinématique pour commander une gouverne aérodynamique, la chaîne cinématique étant munie d'une commande de vol et d'un actionneur de commande relié à la commande de vol, l'aéronef comportant une installation motrice hybride, l'installation motrice hybride étant munie d'au moins un moteur thermique, d'au moins une machine électrique, d'une source d'énergie électrique et d'une chaîne de transmission mécanique entraînant en rotation un rotor.

Cet aéronef est remarquable en ce qu'il comporte un dispositif d'aide au pilotage tel que précédemment décrit.

L'invention et ses avantages apparaîtront avec plus de détails dans le cadre de la description qui suit avec des exemples donnés à titre illustratif en référence aux figures annexées qui représentent :
- la figure 1, une vue d'un système mécanique de commande de vol d'un aéronef,
- la figure 2, une vue d'un système électrique de commande de vol d'un aéronef,
- la figure 3, une vue d'un aéronef comportant un système de commande de vol selon la figure 1 ou 2,
- la figure 4, un schéma synoptique du procédé selon l'invention,
- la figure 5, un graphique représentant une loi d'effort par paliers,
- la figure 6, un graphique représentant une loi d'effort élastique,
- la figure 7, un graphique représentant une loi d'effort d'amortissement,
- la figure 8, un graphique représentant un exemple de variation d'une raideur associée à une loi d'effort, et
- la figure 9, un graphique représentant une exemple de variation d'une raideur associée à une loi d'effort.

Les éléments présents dans plusieurs figures distinctes sont affectés d'une seule et même référence.

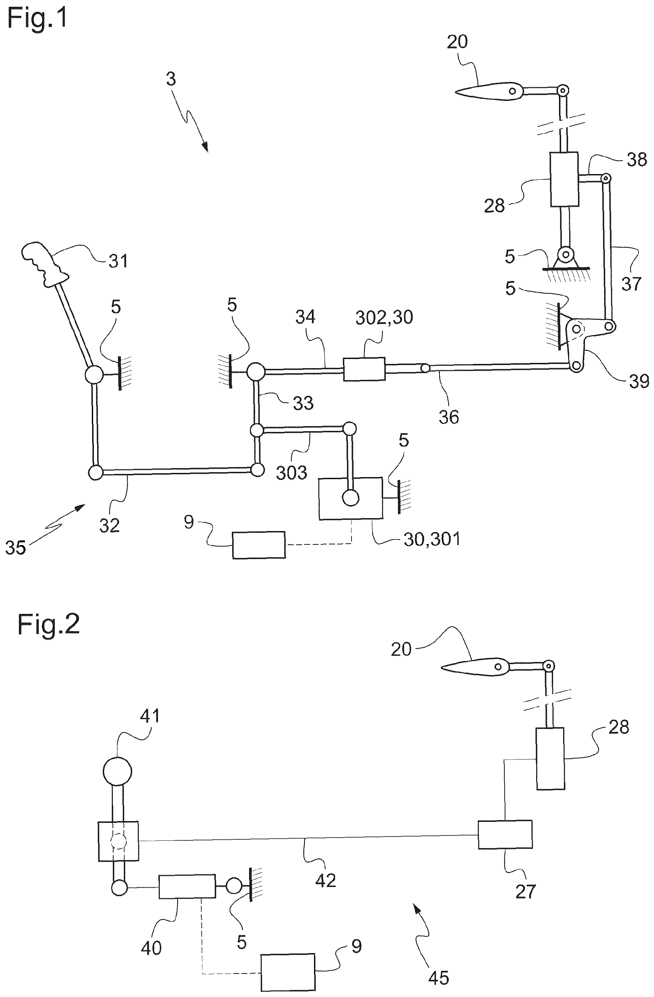

La figure 1 présente un système mécanique 3 de commande de vol pour un aéronef 1.

Un tel système mécanique 3 de commande de vol a pour fonction de commander des mouvements d'une ou de plusieurs gouvernes aérodynamiques 20 permettant de diriger l'aéronef 1. De telles gouvernes aérodynamiques 20 peuvent comprendre des pales d'un rotor 25, notamment d'un rotor de sustentation ou d'un rotor de contrôle du mouvement en lacet, voire d'hélices, ainsi que des volets de profondeur ou de direction.

Indépendamment de la nature des gouvernes aérodynamiques 20, le système mécanique 3 de commande de vol comprend au moins une chaîne cinématique 35 et au moins un actionneur de vol 28 relié à une gouverne aérodynamique 20. Par exemple, un actionneur de vol 28 prend la forme d'une servocommande pouvant piloter le pas d'une ou de plusieurs pales.

Un tel système mécanique 3 de commande de vol peut comporter un unique actionneur de vol 28 ou plusieurs actionneurs de vol 28. En outre, un actionneur de vol 28 peut être associé à un unique système mécanique 3 de commande de vol ou être partagé par plusieurs systèmes mécaniques 3 de commande de vol. Par exemple, des actionneur de vol 28 pilotant le pas de pales d'un rotor 25 peuvent être contrôlées par un levier de pas collectif et un manche de commande cyclique.

La chaîne cinématique 35 est munie d'une commande de vol 31 et éventuellement d'au moins une bielle, voire selon l'exemple de plusieurs bielles 32,33,34,36,37,38 articulées entre elles, voire d'au moins une liaison telle qu'un guignol 39 voire d'un combinateur. La chaîne cinématique 35 comporte également un ou plusieurs actionneurs de commande 30. La référence « 30 » désigne n'importe lequel des actionneurs de commande d'une chaîne cinématique 35, les références « 301, 302 » désignant des actionneurs de commande spécifiques si besoin.

Selon l'exemple de la figure 1, une chaîne cinématique 35 peut comporter un actionneur parallèle 301 et un actionneur série 302.

L'actionneur parallèle ou de trim 301 relie, selon l'exemple illustré, une bielle 33 de la chaîne cinématique 35, par l'intermédiaire d'une bielle de liaison 303, à un point fixe d'une structure 5 de l'aéronef 1. Cet actionneur parallèle 301 peut comporter par exemple un vérin ou un moteur électrique. Cet actionneur parallèle 301 peut ainsi agir sur la commande de vol 31 pour ancrer cette commande de vol 31 à une position déterminée et/ou appliqué un effort sur cette commande de vol 31

L'actionneur série 302 relie entre elles, selon l'exemple illustré, deux bielles 34,36 de la chaîne cinématique 35. Cet actionneur série 302 peut comporter par exemple un vérin électrique, pneumatique ou hydraulique. Cet actionneur série 302 peut ainsi piloter l'actionneur de vol 28 via les bielles 36,37,38, de façon transparente pour un pilote, à savoir sans modifier la position de la commande de vol 31, celle-ci étant ancrée grâce à l'actionneur parallèle 301.

La figure 2 présente un système électrique 4 de commande de vol pour un aéronef 1.A l'instar d'un système mécanique 3 de commande de vol, un système électrique 4 de commande de vol peut comporter un unique actionneur de vol 28 ou plusieurs actionneurs de vol 28, ce ou ces actionneurs de vol 28 pouvant être associés à un unique système électrique 4 de commande de vol ou être partagés par plusieurs systèmes électriques 4 de commande de vol.

Ce système électrique 4 de commande de vol comporte une chaîne cinématique 45 et l'actionneur de vol 28 relié à une gouverne aérodynamique 20. La chaîne cinématique 45 est munie d'une commande de vol 41, par exemple de type mini-manche ou joystick, et d'au moins une liaison électrique 42 reliant la commande de vol 41 à l'actionneur de vol 28 via au moins un calculateur 27. La chaîne cinématique 45 peut comporter également un ou plusieurs actionneurs de commande 40 reliant, selon l'exemple illustré, la commande de vol 41 à un point fixe d'une structure 5 de l'aéronef 1. Cet actionneur de commande 40 peut comporter par exemple un vérin ou un moteur électrique. Cet actionneur de commande 40 peut ainsi agir sur la commande de vol 41 pour ancrer cette commande de vol 41 à une position déterminée et/ou appliqué un effort à cette commande de vol 41. La commande de vol 41 peut ainsi transmettre, à l'aide de la liaison électrique 42, un signal électrique ou optique, numérique ou analogique, au calculateur 27 pilotant l'actionneur de vol 28.

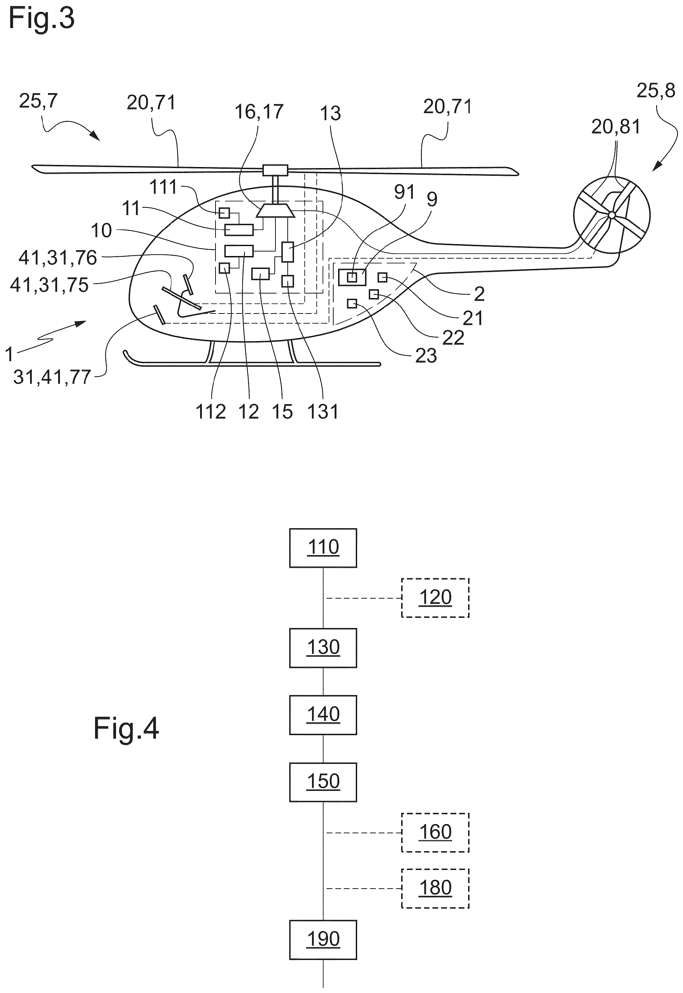

Selon l'exemple de la figure 3, l'aéronef 1 peut être un hélicoptère comprenant un rotor principal 7 et un rotor de contrôle du mouvement en lacet 8. Dans ce cas, l'aéronef 1 peut comporter plusieurs systèmes mécaniques 3 ou électriques 4 de commande de vol munis respectivement de plusieurs commandes de vol 31,41, et par exemple un levier 75 de pas collectif commandant une variation collective du pas des premières pales 71 du rotor principal 7, un manche 76 de pas cyclique commandant une variation cyclique du pas de ces premières pales 71, et un palonnier 77 commandant une variation collective du pas des secondes pales 81 du rotor de contrôle du mouvement en lacet 8.

L'aéronef 1 comporte également une installation motrice hybride 10 munie d'un ou de plusieurs moteurs thermiques 11,12, d'une ou de plusieurs machines électriques 13, d'une source 15 d'énergie électrique et d'une chaîne de transmission mécanique 16 entraînant en rotation un ou plusieurs rotors 25. Selon l'exemple d'aéronef 1 représenté sur la figure 3, la chaîne de transmission mécanique 16 peut entraîner en rotation les rotors principal 7 et de contrôle du mouvement en lacet 8.

La source 15 est reliée électriquement à la ou aux machines électriques 13, qui peuvent être un moteur électrique, un générateur électrique ou encore un moteur-générateur. La source 15 peut comporter une ou plusieurs batteries électriques, éventuellement rechargeables. Alternativement ou de façon complémentaire, la source 15 peut comporter une ou plusieurs piles à combustible, par exemple à hydrogène ou au méthanol, ainsi qu'un réservoir contenant ce combustible et relié à la ou aux piles à combustible.

Selon l'exemple illustré, la chaîne de transmission mécanique 16 comporte une boîte de transmission de puissance 17 et l'installation motrice hybride 10 comporte deux moteurs thermiques 11,12 et une machine électrique 13. Les deux moteurs thermiques 11,12 et la machine électrique 13 sont reliés respectivement à des arbres d'entrée de la boîte de transmission de puissance 17, des arbres de sortie de la boîte de transmission de puissance 17 étant reliés mécaniquement et respectivement aux rotors 7,8 qui peuvent ainsi être entraînés en rotation de façon conjointe ou indépendante par les deux moteurs thermiques 11,12 et la machine électrique 13. Les moteurs thermiques 11,12 sont reliés respectivement à des calculateurs moteurs 111,121, par exemple des calculateurs de systèmes de type *FADEC* pour la désignation en langue anglaise « Full Authority Digital Engine Control », contrôlant le fonctionnement de ces moteurs thermiques 11,12. La machine électrique 13 est reliée à un contrôleur moteur 131 contrôlant le fonctionnement de cette machine électrique 13.

Alternativement, la machine électrique 13 peut être intercalée entre un moteur thermique 11 et la chaîne de transmission mécanique 16, par exemple entre ce moteur thermique 11 et un arbre d'entrée de la boîte de transmission de puissance 17 de cette chaîne de transmission mécanique 16. Dans ce cas, la machine électrique 13 et le moteur thermique 11 peuvent entraîner conjointement en rotation cet arbre d'entrée de la boîte de transmission de puissance 17.

Alternativement, l'installation motrice hybride 10 peut comporter un ou plusieurs moteurs thermiques 11,12 entraînant en rotation un ou plusieurs générateurs électriques 13 pour transformer une énergie mécanique en énergie électrique afin d'alimenter la source 15, voire d'autres machines électriques 13. L'installation motrice hybride 10 comporte également un ou des moteurs électriques 13 entraînant en rotation un ou plusieurs rotors 25, via la chaîne de transmission mécanique 16.

L'aéronef 1 peut aussi comporter un dispositif 2 d'aide au pilotage de l'aéronef 1.Indépendamment que l'aéronef 1 comporte un ou plusieurs systèmes mécaniques 3 ou électriques 4 de commande de vol, ce dispositif 2 d'aide au pilotage est muni d'un calculateur 9 relié à le ou aux actionneurs de commande 30,40 de la chaîne cinématique 31,41. Le calculateur 9 peut être dédié au dispositif 2 d'aide au pilotage, ou éventuellement partagé avec d'autres équipements de l'aéronef 1.

Le dispositif 2 d'aide au pilotage peut comporter plusieurs senseurs mesurant diverses caractéristiques ou paramètres de l'aéronef 1 et reliés au calculateur 9 par une liaison filaire ou sans fil. Par exemple, le dispositif 2 d'aide au pilotage peut comporter un senseur angulaire 21 mesurant une position courante de la commande de vol 31,41. Cette position courante est par exemple mesurée par rapport à une position de référence de la commande de vol 31,41 qui peut être une position neutre de la commande de vol 31,41 lorsqu'aucune force n'est appliquée sur elle par un pilote.

Le dispositif 2 d'aide au pilotage peut comporter un thermomètre 22 mesurant la température extérieure ainsi qu'un baromètre 23 mesurant la pression atmosphérique à l'extérieur de l'aéronef 1.

Le dispositif 2 d'aide au pilotage peut comporter d'autres senseurs pour mesurer des caractéristiques de l'installation motrice 10. Par exemple, le dispositif 2 d'aide au pilotage peut comporter un couplemètre pour mesurer un couple moteur au sein de la chaîne de transmission mécanique 16, voire un thermomètre et un chronomètre pour mesurer respectivement une température interne et un taux de vieillissement de la chaîne de transmission mécanique 16. Le dispositif 2 d'aide au pilotage peut aussi comporter un ou plusieurs tachymètres pour mesurer une vitesse de rotation d'un arbre d'entrée ou de sortie de la chaîne de transmission mécanique 16. Le dispositif 2 d'aide au pilotage peut encore comporter un couplemètre, un tachymètre et un chronomètre pour mesurer un couple moteur, une vitesse de rotation sur un arbre d'entrée ou de sortie de la boîte de transmission de puissance 17 ainsi qu'un taux de vieillissement de la boîte de transmission de puissance 17.

Une caractéristique de l'installation motrice 10 peut aussi être la vitesse de rotation du rotor 25, qui est égale à une vitesse de rotation d'un arbre de sortie de la chaîne de transmission mécanique 16, et en particulier d'un arbre de sortie de la boîte de transmission de puissance 17, mesurée à l'aide d'un tachymètre.

Le calculateur 9 peut également être relié, par une liaison filaire ou sans fil, aux calculateurs moteurs 111,121 afin de recevoir des informations relatives à des caractéristiques des moteurs thermiques 11,12. Ces caractéristiques des moteurs thermiques 11,12 peuvent être par exemple une température interne du moteur thermique 11,12, un couple moteur, une durée d'utilisation de ce couple moteur, une durée totale d'utilisation et/ou un taux de vieillissement.

Les calculateurs moteurs 111,121 et les senseurs transmettent alors respectivement des signaux électriques ou optiques, numériques ou analogiques au calculateur 9, via les liaisons filaires ou sans fil, ces signaux étant porteurs de valeurs de cette ou ces caractéristiques.

De plus, le calculateur 9 peut comporter une mémoire ou être relié à une telle mémoire. Cette mémoire peut stocker un ou plusieurs segments de codes ou un programme d'ordinateur mis en œuvre par le calculateur 9 afin de réaliser les étapes d'un procédé d'aide au pilotage de l'aéronef 1. La figure 4 représente un schéma synoptique de ce procédé d'aide au pilotage. Ce procédé peut comporter les étapes suivantes.

Tout d'abord, le procédé comporte une mesure 110 d'une ou de plusieurs caractéristiques du ou des moteurs thermiques 11,12, de la chaîne de transmission mécanique 16 ou du rotor 25. Cette mesure 110 d'une ou de plusieurs caractéristiques peut être effectuée à l'aide d'un calculateur moteur 111,121 associé à un des moteurs thermiques 11,12 et/ou de senseurs positionnés sur le ou les moteurs thermiques 11,12, la chaîne de transmission mécanique 16 ou le rotor 25.

Ce procédé peut également comporter de façon optionnelle une mesure 120 d'un ou de plusieurs paramètres environnementaux. Ces paramètres environnementaux comportent par exemple une température et une pression atmosphérique extérieures à l'aéronef 1 mesurées à l'aide du thermomètre 22 et du baromètre 23.

Ensuite, le procédé comporte une détermination 130 d'un seuil relatif à un paramètre fonctionnel de l'installation motrice hybride 10, à l'aide du calculateur 9, en fonction de la ou des caractéristiques précédemment mesurées. Ce seuil peut éventuellement être déterminé également en fonction d'un ou de plusieurs paramètres environnementaux. Ce seuil peut être déterminé à l'aide d'une ou de plusieurs lois ou abaques préalablement enregistrés dans une mémoire du calculateur 9 ou dans une mémoire reliée au calculateur 9, et faisant intervenir la ou les caractéristiques du ou des moteurs thermiques 11,12, de la chaîne de transmission mécanique 16 et/ou du rotor 25, voire le cas échéant un ou plusieurs paramètres environnementaux.

Le paramètre fonctionnel peut être le couple moteur d'un des moteurs thermiques 11,12 transmis par le calculateur moteur 111,121 associé à ce moteur thermique 11,12 ou mesuré par un senseur positionné sur ce moteur thermique 11,12, le seuil étant alors un couple limite prédéterminé pour ce moteur thermique 11,12.

Alternativement, le paramètre fonctionnel peut être un couple moteur mesuré par un senseur adapté et positionné dans la chaîne de transmission mécanique 16, le seuil étant alors un couple maximal de la chaîne de transmission mécanique 16. Le paramètre fonctionnel peut en particulier être un couple moteur mesuré par un couplemètre positionné sur un arbre d'entrée ou de sortie de la boîte de transmission de puissance 17.

Alternativement, le paramètre fonctionnel peut être la vitesse de rotation du rotor 25 mesuré par un tachymètre, et le seuil étant alors une vitesse minimale de rotation du rotor 25.

Alternativement, le paramètre fonctionnel peut être une distance atteignable par l'aéronef 1 déterminée par un calculateur dédié ou un système avionique de l'aéronef 1 et le seuil étant alors une distance objectif.

Le procédé comporte alors le calcul 140 d'une position limite de la commande de vol 31,41 pour laquelle le paramètre fonctionnel de l'installation motrice hybride 10 est égal au seuil. Ce calcul 140 est effectué par le calculateur 9 en fonction du seuil, du paramètre fonctionnel de l'installation motrice hybride 10, voire d'une vitesse d'avancement de l'aéronef 1 et d'une vitesse de rotation du rotor 25. Ce calcul 140 peut être effectué à l'aide d'une ou de plusieurs lois ou abaques préalablement enregistrés dans une mémoire du calculateur 9 ou dans une mémoire reliée au calculateur 9.

Le procédé comporte ensuite une mesure 150 d'une position courante de la commande de vol 31,41, par exemple à l'aide du senseur angulaire 21. Cette position courante de la commande de vol 31,41, ainsi que la position limite de la commande de vol 31,41 peuvent être définies respectivement par des angles de la commande de vol 31,41 par rapport à la position de référence de la commande de vol 31,41.

Enfin, le procédé comporte une application 190 d'un premier effort sur la commande de vol 31,41 à l'aide de l'actionneur de commande 30,40 selon une loi d'effort préétablie lorsque la position courante de la commande de vol 31,41 dépasse la position limite, la loi d'effort préétablie étant fonction au moins d'une quantité courante d'énergie électrique de la source 15. Dans le cadre de l'exemple de système mécanique 3 de commande de vol représenté sur la figure 1, le premier effort peut être appliqué préférentiellement par l'actionneur parallèle 301, bien que l'actionneur série 302 puisse également appliquer ce premier effort seul, voire de façon conjointe avec l'actionneur parallèle 301.

Dans ce but, le calculateur 9 transmet un signal, électrique ou optique, numérique ou analogique, par une liaison filaire ou sans fil, à l'actionneur de commande 30,40, ce signal étant porteur d'une information relative au premier effort. L'actionneur de commande 30,40 peut alors générer le premier effort résistant sur la commande de vol 31,41 en appliquant la loi d'effort préétablie dès que la position limite est dépassée par la position courante de la commande de vol 31,41.

Pour générer cet effort résistant, l'actionneur de commande 30,40, lorsqu'il est un vérin pneumatique ou hydraulique, adapte la pression du fluide dans les chambres de ce vérin en fonction de la loi d'effort préétablie et du déplacement de la commande de vol 31,41. Lorsque l'actionneur de commande 30,40 est un moteur électrique, le couple appliqué par l'actionneur de commande 30,40, directement ou indirectement sur la commande de vol 31,41, est adapté en fonction de la loi d'effort préétablie et du déplacement de la commande de vol 31,41, comme décrit par exemple dans le document FR 2946620.

La quantité courante d'énergie électrique de la source 15 est par exemple un niveau de charge en énergie électrique de la batterie lorsque la source 15 comporte une batterie. Lorsque la source 15 comporte une pile à combustible, la quantité courante d'énergie électrique peut alors être fonction d'une quantité de combustible contenue dans un réservoir alimentant la pile à combustible, voire égal à cette quantité de combustible.

Dès lors, le pilote de l'aéronef 1 ressent ce premier effort lorsqu'il agit sur la commande de vol 31,41 et peut prendre conscience de la quantité courante d'énergie électrique de la source 15. **Il** peut alors piloter l'aéronef 1 en ressentant un retour haptique image de la quantité d'énergie disponible pour la ou les machines électriques 13 de l'installation motrice hybride 10.

Une ou plusieurs lois d'effort préétablies peuvent être enregistrées dans une mémoire du calculateur 9 ou dans une mémoire reliée au calculateur 9.

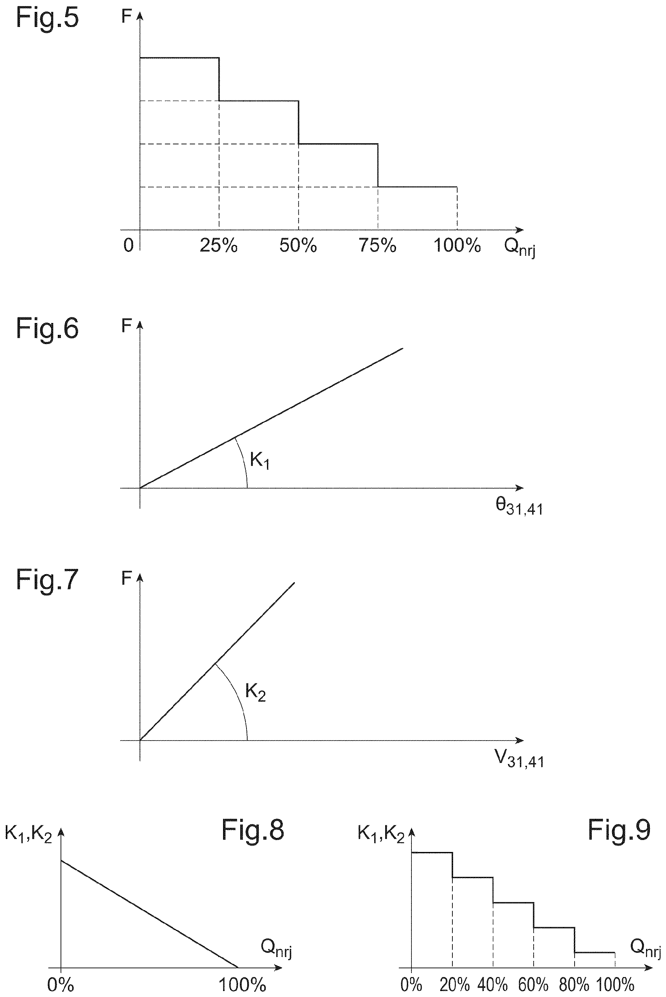

Une telle loi d'effort préétablie peut être une loi par paliers. Une telle loi par paliers, dont un exemple est représenté sur la figure 5, comporte des paliers associés respectivement à des intervalles de la quantité *Qₙᵣⱼ* d'énergie électrique de la source 15. Le premier effort *F* est ainsi constant pour chaque palier et augmente d'un palier à l'autre lorsque la quantité *Qₙᵣⱼ* d'énergie électrique de la source 15 diminue.

Une telle loi d'effort préétablie peut aussi être une loi élastique. Pour une telle loi élastique, dont un exemple est représenté sur la figure 6, le premier effort F varie avec la position courante *θ_{31,41}* de la commande de vol 31,41. Le premier effort *F* est par exemple égal au produit de l'angle courant *θ_{31,41}* de la commande de vol 31,41 et d'une première raideur *K₁* qui augmente lorsque la quantité *Qₙᵣⱼ* d'énergie électrique de la source 15 diminue. La première raideur peut augmenter de façon continue lorsque cette quantité *Qₙᵣⱼ* d'énergie électrique diminue, comme représenté sur la figure 8. Alternativement, la première raideur peut augmenter par paliers, lorsque cette quantité *Qₙᵣⱼ* d'énergie électrique diminue, comme représenté sur la figure 9.

Une telle loi d'effort préétablie peut alternativement être une loi d'amortissement. Selon une telle loi d'amortissement, dont un exemple est représenté sur la figure 7, le premier effort *F* varie avec la vitesse *V*_{*31*,41} de déplacement de la commande de vol 31,41. Le premier effort F est par exemple égal au produit de cette vitesse *V*_{*31*,41} de déplacement et d'une seconde raideur *K₂,* qui augmente lorsque la quantité *Qₙᵣⱼ* d'énergie électrique de la source 15 diminue. La seconde raideur *K₂* peut augmenter de façon continue lorsque cette quantité *Qₙᵣⱼ* d'énergie électrique de la source 15 diminue, comme représenté sur la figure 8. Alternativement, la seconde raideur *K₂* peut augmenter par paliers, lorsque cette quantité *Qₙᵣⱼ* d'énergie électrique de la source 15 diminue, comme représenté sur la figure 9.

Une telle loi d'effort préétablie peut encore être une loi vibratoire. Selon une telle loi vibratoire, le premier effort génère des vibrations dans la commande de vol 31,41 à chaque dépassement de niveaux prédéterminés de la quantité d'énergie électrique de la source 15. Ces niveaux prédéterminés correspondent par exemple à des pourcentages d'une capacité maximale de la source 15 d'énergie électrique, par exemple 25%, 50% et 75%. L'intensité de ces vibrations peut être identique pour chaque dépassement. Alternativement, l'intensité de ces vibrations peut augmenter d'un dépassement à l'autre, lorsque la quantité d'énergie électrique de la source 15 diminue.

Lorsque plusieurs lois d'effort préétablies sont enregistrées dans la mémoire, le calculateur 9 peut choisir automatiquement la loi utilisée en fonction par exemple d'une phase de vol. Le système avionique de l'aéronef 1 peut notamment fournir de manière usuel un signal porteur d'une information relative à cette phase de vol au calculateur 9. Alternativement, le pilote peut choisir, avant le décollage ou en cours de vol, la loi utilisée à l'aide d'une interface homme-machine, par exemple un écran muni d'une dalle tactile, reliée au calculateur 9.

En outre, le procédé selon l'invention peut comporter une fourniture 160 par la machine électrique 13 d'une puissance mécanique non nulle au rotor 25 lorsque la position courante de la commande de vol 31,41 est supérieure ou égale à la position limite. Le calculateur 9 transmet alors un signal, électrique ou optique, numérique ou analogique, par une liaison filaire ou sans fil, à la machine électrique 13, ou au contrôleur moteur 131 associé à la machine électrique 13, ce signal étant porteur d'une information relative à la puissance mécanique que doit fournir cette machine électrique 13.

En effet, lorsque la position courante de la commande de vol 31,41 atteint, voire dépasse la position limite, alors un paramètre fonctionnel de l'installation motrice 10 atteint, voire dépasse le seuil associé.

Dès lors, par exemple pour protéger l'installation motrice 10, et éviter une dégradation d'un moteur thermique 11,12 ou de la chaîne de transmission mécanique 16, la machine électrique 13 peut fournir une puissance mécanique non nulle contribuant à l'entraînement en rotation du rotor 25. C'est notamment le cas lorsque le paramètre fonctionnel est relatif aux moteurs thermiques 11,12 ou à la chaîne de transmission mécanique 16.

Par ailleurs, lorsque le paramètre fonctionnel est la vitesse de rotation du rotor 25 et que ce paramètre diminue jusqu'à atteindre le seuil associé, la machine électrique 13 peut alors fournir une puissance mécanique non nulle contribuant à l'entraînement en rotation du rotor 25 de manière à limiter la diminution de cette vitesse de rotation, voire à l'augmenter.

De plus, le procédé selon l'invention peut comporter une application 180 d'un second effort sur la commande de vol 31,41 à l'aide de l'actionneur de commande 30,40 lorsque la position courante de la commande de vol 31,41 est égale à la position limite. Ainsi, le pilote sait que le paramètre fonctionnel a atteint le seuil associé, voire que la machine électrique 13 commence à fournir une puissance mécanique non nulle contribuant à l'entraînement en rotation du rotor 25. Ce second effort peut prendre la forme d'une butée douce, d'une butée dure ou d'une friction, voire de vibrations.

Dans ce but, le calculateur 9 transmet un signal, électrique ou optique, numérique ou analogique, par une liaison filaire ou sans fil, à l'actionneur de commande 30,40, ce signal étant porteur d'une information relative au second effort. L'actionneur de commande 30,40 peut alors générer le second effort résistant sur la commande de vol 31,41 dès que la position courante de la commande de vol 31,41 atteint la position limite.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Procédé d'aide au pilotage d'un aéronef (1), ledit aéronef (1) comportant au moins une chaîne cinématique (35,45) pour commander une gouverne aérodynamique (20), ladite chaîne cinématique (35,45) étant munie d'une commande de vol (31,41) et d'un actionneur de commande (30,40) relié à ladite commande de vol (31,41), ledit aéronef (1) comportant une installation motrice hybride (10), ladite installation motrice hybride (10) étant munie d'au moins un moteur thermique (11,12), d'au moins une machine électrique (13), d'une source (15) d'énergie électrique et d'une chaîne de transmission mécanique (16) entraînant en rotation un rotor (25),
**caractérisé en ce que** le procédé comporte les étapes suivantes :
- mesure (110) d'au moins une caractéristique dudit au moins un moteur thermique (11,12), de ladite chaîne de transmission mécanique (16) ou dudit rotor (25),
- détermination (130) d'un seuil relatif à un paramètre fonctionnel de ladite installation motrice hybride (10) en fonction de ladite au moins une caractéristique,
- calcul (140) d'une position limite de ladite commande de vol (31,41) pour laquelle ledit paramètre fonctionnel de ladite installation motrice hybride (10) est égal audit seuil,
- mesure (150) d'une position courante de ladite commande de vol (31,41),
- application (190) d'un premier effort sur ladite commande de vol (31,41) à l'aide dudit actionneur de commande (30,40) selon une loi d'effort préétablie lorsque ladite position courante de ladite commande de vol (31,41) dépasse ladite position limite, ladite loi d'effort préétablie étant fonction au moins d'une quantité courante d'énergie électrique de ladite source (15).

2. Procédé selon la revendication 1,
comportant une fourniture (160) par ladite machine électrique (13) d'une puissance mécanique non nulle audit rotor (25) lorsque ladite position courante de ladite commande de vol (31,41) est supérieure ou égale à ladite position limite.

3. Procédé selon l'une quelconque des revendications 1 à 2,
dans lequel ladite position courante et ladite position limite de ladite commande de vol (31,41) sont définies respectivement par des angles de ladite commande de vol (31,41) par rapport à une position de référence de ladite commande de vol (31,41).

4. Procédé selon l'une quelconque des revendications 1 à 3,
comportant une application (180) d'un second effort sur ladite commande de vol (31,41) à l'aide dudit actionneur de commande (30,40) lorsque ladite position courante de ladite commande de vol (31,41) est égale à ladite position limite.

5. Procédé selon l'une quelconque des revendications 1 à 4,
dans lequel ladite au moins une caractéristique comporte une ou plusieurs des caractéristiques suivantes :
- une température interne, un couple moteur, un couple moteur maximal et un taux de vieillissement dudit au moins un moteur thermique (11,12),
- une température interne, un couple moteur, un couple moteur maximal et un taux de vieillissement de ladite chaîne de transmission mécanique (16),
- une vitesse de rotation dudit rotor (25).

6. Procédé selon l'une quelconque des revendications 1 à 5, comportant une mesure (120) d'au moins un paramètre environnemental parmi une température et une pression atmosphérique extérieures audit aéronef (1), ladite détermination (130) dudit seuil et ledit calcul (140) de ladite position limite de la commande de vol (31,41) étant fonction dudit au moins un paramètre environnemental.

7. Procédé selon l'une quelconque des revendications 1 à 6,
dans lequel ledit paramètre fonctionnel est un couple moteur dudit au moins un moteur thermique (11,12), et ledit seuil est un couple limite prédéterminé dudit au moins un moteur thermique (11,12).

8. Procédé selon l'une quelconque des revendications 1 à 6,
dans lequel ledit paramètre fonctionnel est un couple mesuré dans ladite chaîne de transmission mécanique (16), et ledit seuil est un couple maximal de ladite chaîne de transmission mécanique (16).

9. Procédé selon l'une quelconque des revendications 1 à 6,
dans lequel ledit paramètre fonctionnel est une vitesse de rotation dudit rotor (25), et ledit seuil est une vitesse minimale de rotation dudit rotor (25).

10. Procédé selon l'une quelconque des revendications 1 à 6,
dans lequel ledit paramètre fonctionnel est une distance atteignable par ledit aéronef (1) et le seuil est une distance objectif.

11. Procédé selon l'une quelconque des revendications 1 à 10,
dans lequel ledit calcul (140) d'une position limite est effectué en fonction dudit seuil, dudit paramètre fonctionnel de ladite installation motrice hybride (10), d'une vitesse d'avancement dudit aéronef (1) et d'une vitesse de rotation dudit rotor (25).

12. Procédé selon l'une quelconque des revendications 1 à 11,
dans lequel ladite loi d'effort préétablie est choisie parmi :
- une loi par paliers, lesdits paliers étant associés respectivement à des intervalles de ladite quantité d'énergie électrique de ladite source (15), ledit premier effort étant constant pour chaque palier et augmentant d'un palier à l'autre parallèlement à une baisse de ladite quantité d'énergie électrique de ladite source (15),
- une loi élastique, ledit premier effort variant avec ladite position courante de ladite commande de vol (31,41), et étant égal à un angle courant de ladite commande de vol (31,41) multiplié par une première raideur, ladite première raideur augmentant en fonction d'une baisse de ladite quantité d'énergie électrique de ladite source (15), de façon continue ou par paliers, l'angle courant de la commande de vol étant défini par rapport à une position de référence de ladite commande de vol (31,41),
- une loi d'amortissement, ledit premier effort variant avec une vitesse de déplacement de ladite commande de vol (31,41), et étant égal à ladite vitesse de déplacement multipliée par une seconde raideur, ladite seconde raideur augmentant en fonction d'une baisse de ladite quantité d'énergie électrique de ladite source (15), de façon continue ou par paliers,
- une loi vibratoire, ledit premier effort générant des vibrations dans ladite commande de vol (31,41) à chaque dépassement de niveaux prédéterminés d'énergie électrique de ladite source (15), une intensité desdites vibrations étant identique à chaque dépassement ou augmentant d'un dépassement à l'autre au fur et à mesure que ladite quantité d'énergie électrique de ladite source (15) diminue.

13. Procédé selon l'une quelconque des revendications 1 à 12, dans lequel ladite source (15) comporte une batterie électrique et ladite quantité courante d'énergie électrique est un niveau de charge en énergie électrique de ladite batterie électrique ou ladite source (15) comporte une pile à combustible et ladite quantité courante d'énergie électrique est fonction d'une quantité de combustible contenue dans un réservoir alimentant ladite pile à combustible.

14. Dispositif (2) d'aide au pilotage d'un aéronef (1), ledit dispositif (2) d'aide au pilotage comportant au moins une chaîne cinématique (35,45) pour commander une gouverne aérodynamique (20), ladite chaîne cinématique (35,45) étant munie d'une commande de vol (31,41) et d'un actionneur de commande (30,40) relié à ladite commande de vol (31,41), ledit dispositif (2) d'aide au pilotage comportant un calculateur (9) relié audit actionneur de commande (30,40),ledit aéronef (1) comportant une installation motrice hybride (10), ladite installation motrice hybride (10) étant munie d'au moins un moteur thermique (11,12), d'au moins une machine électrique (13), d'une source (15) d'énergie électrique et d'une chaîne de transmission mécanique (16) entraînant en rotation un rotor (25),
**caractérisé en ce que** ledit calculateur (9) est configuré pour mettre en œuvre le procédé selon l'une quelconque des revendications 1 à 13, ledit dispositif (2) d'aide au pilotage comportant un senseur de mesure mesurant au moins une caractéristique dudit aéronef (1), un senseur angulaire (21) mesurant ladite position courante de ladite commande de vol (31,41) et une mémoire stockant ladite loi d'effort préétablie.

15. Aéronef (1) comportant au moins une chaîne cinématique (35,45) pour commander une gouverne aérodynamique (20), ladite chaîne cinématique (35,45) étant munie d'une commande de vol (31,41) et d'un actionneur de commande (30,40) relié à ladite commande de vol (31,41), ledit aéronef (1) comportant une installation motrice hybride (10), ladite installation motrice hybride (10) étant munie d'au moins un moteur thermique (11,12), d'au moins une machine électrique (13), d'une source (15) d'énergie électrique et d'une chaîne de transmission mécanique (16) entraînant en rotation un rotor (25),
**caractérisé en ce que** ledit aéronef (1) comporte un dispositif (2) d'aide au pilotage selon la revendication 14.
